# EUROPEAN PATENT SPECIFICATION

(11) **EP 4 490 555 B1**
(45) Date of publication and mention of the grant of the patent: **11.11.2026**
(21) Application number: 23706820.0
(22) Date of filing: 13.02.2023
(51) Int. Cl.: G02B 5/18, G02B 27/01, G02B 27/00

(54) **DISPLAY STRUCTURE, DISPLAY DEVICE, AND VEHICLE**
ANZEIGESTRUKTUR, ANZEIGEVORRICHTUNG UND FAHRZEUG
STRUCTURE D'AFFICHAGE, DISPOSITIF D'AFFICHAGE ET VÉHICULE

(30) Priority: 11.03.2022 FI 20225215
(43) Date of publication of application: 15.01.2025
(73) Proprietor: Dispelix Oy, 02130 Espoo (FI)
(72) Inventor: ERDMANIS, Mikhail, 02130 Espoo (FI)
(74) Representative: Giraldi, Elisa
(86) International application number: PCT/FI2023/050091
(87) International publication number: WO 2023/170335

(56) References cited:
- US-A1- 2020 393 681
- US-A1- 2021 109 273
- US-A1- 2021 124 170

## Description

### FIELD OF TECHNOLOGY

This disclosure concerns display devices. In particular, this disclosure concerns waveguide-based display structures, display devices comprising such display structures, and vehicles comprising such display devices.

### BACKGROUND

In modern display devices, laser light sources are commonly used due to their higher image sharpness and lowered energy consumption as well as the smaller form factors achievable with such sources. The latter two benefits, i.e., lowered energy consumption and smaller form factor, are especially beneficial for portable display devices and vehicular display devices. The sizes and masses of portable display devices may be further decreased by utilization of waveguide-based structures for guiding light from the optical engines of such display devices towards the users' eye(s).

Since the images produced by typical optical engines are relatively small, exit-pupil-expansion methods based on pupil replication are commonly used to increase the sizes of output images in conventional portable waveguide-based display devices. However, due to the relatively high temporal coherence of laser light sources, pupil replication may cause disturbances in image quality if replicated beams of light interfere with each other when arriving at the same location via different propagation paths.

In light of this, it may be desirable to develop new solutions related to display devices.

Prior art is represented by US 2021/124170 A1.

### SUMMARY

The invention is defined by the claims.

This summary is provided to introduce a selection of concepts in a simplified form that are further described below in the detailed description. This summary is not intended to identify key features or essential features of the claimed subject matter, nor is it intended to be used to limit the scope of the claimed subject matter. According to a first aspect, a display structure is provided. The display structure comprises a waveguide; an in-coupling structure configured to couple a set of input beams into the waveguide as a set of in-coupled beams associated with a set of in-coupled k-vectors defining a first domain in k-space in an annular guided propagation domain associated with the waveguide; a diffractive exit pupil expansion structure configured to receive the set of in-coupled beams and to diffract the set of in-coupled beams to form at least three sets of guided beams associated with at least three sets of k-vectors lying in at least three domains including the first domain; and a diffractive retardation and out-coupling structure configured to receive from the exit pupil expansion structure a diffracted set of beams associated with a diffracted set of k-vectors lying in one of the at least three domains, the diffractive retardation and out-coupling structure comprising an out-coupling grating configured to couple light out of the waveguide as a set of output beams. The retardation and out-coupling structure is configured to diffract the diffracted set of beams to form at least one returning set of beams guided towards the exit pupil expansion structure and associated with at least one returning set of k-vectors, each of the at least one returning set of k-vectors lying in any other of the at least three domains.

According to a second aspect, a display device comprising a display structure in accordance with the first aspect is provided.

According to a third aspect, a vehicle comprising a vehicular display device in accordance with the second aspect is provided.

### BRIEF DESCRIPTION OF THE DRAWINGS

The present disclosure will be better understood from the following detailed description read in light of the accompanying drawings, wherein:
**FIG.** 1 shows a display structure,
**FIG.** 2 depicts a k-vector diagram, and
**FIG.** 3 illustrates a plurality of k-vector diagrams,
**FIG.** 4 depicts a display device, and
**FIG.** 5 shows a vehicle.

Unless specifically stated to the contrary, any drawing of the aforementioned drawings may be not drawn to scale such that any element in said drawing may be drawn with inaccurate proportions with respect to other elements in said drawing in order to emphasize certain structural aspects of the embodiment of said drawing.

Moreover, corresponding elements in the embodiments of any two drawings of the aforementioned drawings may be disproportionate to each other in said two drawings in order to emphasize certain structural aspects of the embodiments of said two drawings.

Further, any vector extending from a specific first point to a specific second point in any drawing of the aforementioned drawings may be drawn with inaccurate starting and/or ending points in order to increase clarity and comprehensibility of said drawing.

### DETAILED DESCRIPTION

Concerning display structures and display devices discussed in this detailed description, the following shall be noted.

In this specification, a "display device" may refer to an operable output device, e.g., electronic device, for visual presentation of images and/or data. A display device may generally comprise any part(s) or element(s) necessary or beneficial for visual presentation of images and/or data, for example, a power unit; an optical engine; a combiner optics unit, such as a waveguide-based combiner optics unit; an eye tracking unit; a head tracking unit; a gesture sensing unit; and/or a depth mapping unit. A display device may or may not be implemented as a see-through display device, and/or as a portable display device, and/or a vehicular display device.

Herein, a "see-through display device" or "transparent display device" may refer to a display device allowing its user to see the images and/or data shown on the display device as well as to see through the display device.

In this specification, a "portable display device" may refer to a display device configured to be easily transportable and/or configured to be carried and/or worn. In some embodiments, a portable display device may be implemented as a head-mounted display device.

Herein, a "head-mounted display device" may refer to a display device configured to be worn on the head, as part of a piece of headgear, and/or on or over the eyes. Generally, a head-mounted display device may or may not be implemented as a see-through display device and/or as a vehicular display device.

Further, a "vehicular display device" may refer to a display device configured for use in a vehicle, for example, while operating said vehicle. Additionally or alternatively, a vehicular display device may refer to a display device configured to present images and/or data associated with a vehicle and/or operation thereof. Generally, a vehicular display device may or may not be implemented as a vehicle-mounted display device fixed to a vehicle.

Throughout this disclosure, a "display structure" may refer to at least part of an operable display device. Additionally of alternatively, a display structure may refer to a structure suitable for use in a display device.

In this disclosure, a "waveguide" may refer to an optical waveguide. Additionally or alternatively, a waveguide may refer to a two-dimensional waveguide, wherein light may be confined along a thickness direction of said waveguide. Additionally or alternatively, a waveguide may refer to a two-dimensional waveguide, wherein light may be confined between opposite faces of said waveguide by total internal reflection.

Throughout this specification, a "k-vector", or "wave vector" may refer to a vector in k-space. Additionally or alternatively, a k-vector may represent an optical beam, i.e., a ray of light, with a specific propagation direction. Generally, a k-vector associated with an optical beam propagating in a medium may have a magnitude defined by an (angular) wavenumber defined as $k = n \frac{2 π}{{λ}_{o}}$, wherein n is the refractive index of the medium and *λ*₀ is the wavelength of the optical beam in vacuum. As is evident based on the equation above, optical beams with shorter wavelengths have k-vectors with higher magnitudes. Additionally, a k-vector may point in the propagation direction of the optical beam that it represents. In light of the above, a k-vector **(k)** may be defined as **k** = k**v̂**, wherein k is the wavenumber of the optical beam and **v̂** is a unit vector pointing in the propagation direction of the optical beam.

Herein, "k-space", or "angular space", may refer to a framework, wherein spatial frequency space analysis is used to relate k-vectors to geometrical points. Additionally or alternatively, k-space may refer to a two-dimensional projected space associated with a waveguide. In k-space, any diffraction event occurring while light propagates in a waveguide can be represented as a translation. Using the k-space formalism, the operation of a waveguide may be described by the manner in which said waveguide causes a set of input k-vectors to move in k-space.

Generally, in an unbounded homogeneous medium, all propagation directions are permitted, and the magnitudes of all k-vectors of a given wavelength are the same. As such, permitted k-vectors of a given wavelength in an unbounded homogeneous medium define a hollow sphere in k-space with a radius defined by the common wavenumber of the k-vectors. Since the common wavenumber of the k-vectors is proportional to the refractive index of the medium, the radius of the hollow sphere is also proportional to the refractive index of the medium.

However, in a homogeneous waveguide extending along a plane, permitted k-vectors of a given wavelength are commonly represented by a solid disk with a radius defined by the common wavenumber of the k-vectors. Such representation may be viewed as a projection of the previously described hollow sphere onto a plane in k-space corresponding to the plane along which the waveguide extends. Every point within the boundary of the solid disk corresponds to two permitted k-vectors having components perpendicular to the plane opposite to one another. For example, in case of a homogeneous waveguide extending along the x-y plane, the out-of-plane component of k_{z} of a k-vector with a wavenumber k is given by ${k}_{z} = \pm \sqrt{{k}^{2} - {k}_{x}^{2} - {k}_{y}^{2}}$, wherein kₓ and k_{y} are the magnitudes of the x- and y-components of the k-vector, respectively. Similarly to the case in unbounded homogeneous medium, the radius of the solid disk is proportional to the refractive index of the waveguide.

Typically, not all k-vectors permitted in a waveguide are guided in the waveguide. A waveguide is commonly surrounded by a medium having a refractive index less than that of the waveguide. Generally, a separate solid disk may be defined to represent permitted k-vectors in such medium. Since the refractive index of the surrounding medium is less than that of the waveguide, the solid disk associated with the surrounding medium has a radius less than that of the solid disk associated with the waveguide.

In general, an annular domain in k-space defined by the relative complement of such smaller solid disk in such larger solid disk, i.e., the difference of the larger solid disk and the smaller solid disk, may be referred to as a "guided propagation domain" associated with a waveguide. All k-vectors with in-plane components lying within such guided propagation domain of a waveguide may propagate in said waveguide in guided manner.

As stated above, the smaller solid disk represents permitted k-vectors in a medium surrounding a waveguide. Since light to be coupled into or out of a waveguide must be able to propagate in such surrounding medium, only k-vectors with in-plane components lying within such smaller solid disk may be coupled into or out of a waveguide. Consequently, the smaller solid disk representing permitted k-vectors in a medium surrounding a waveguide may be referred to as a "coupling domain" associated with said waveguide.

In light of the above, k-vectors permitted in a waveguide can be depicted in k-space using a two-dimensional k-vector diagram. Herein, a "k-vector diagram" may refer to a depiction of k-space, wherein guided propagation angles for optical beams propagating in a waveguide are represented by an annular guided propagation domain associated with said waveguide. Additionally or alternatively, a k-vector diagram may refer to a depiction of k-space, wherein non-guided propagation angles of optical beams propagating in a waveguide are represented by a coupling domain associated with said waveguide.

Generally, the outer radius of a guided propagation domain may be inversely proportional to wavelength of light such that light of lower wavelength may be associated with a wider guided propagation domain. Although the width of a guided propagation domain may influence the range of k-vectors that may be guided in a waveguide, a non-dispersive waveguide may still not be generally able to support a wider field of view with lower wavelengths. This may be due to the angular extent of a field of view being inversely proportional to wavelength. In light of this, k-vector diagrams are typically normalized such that a solid disk associated with propagation in vacuum is depicted with unity radius, i.e., the plots are normalized by dividing each k-vector by its wavenumber in vacuum (kₒ), i.e., by ${k}_{0} = \frac{2 π}{{λ}_{o}}$.

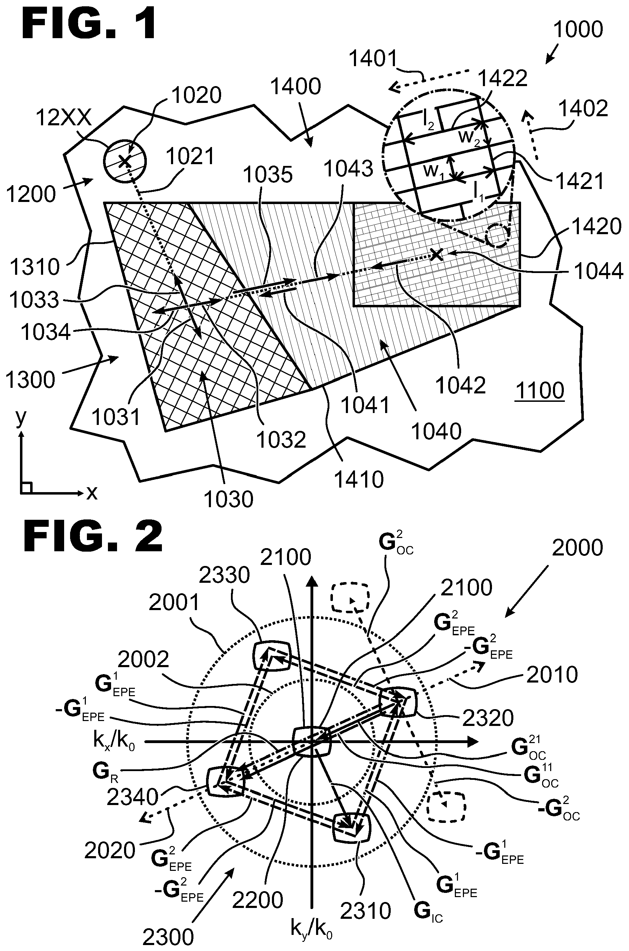

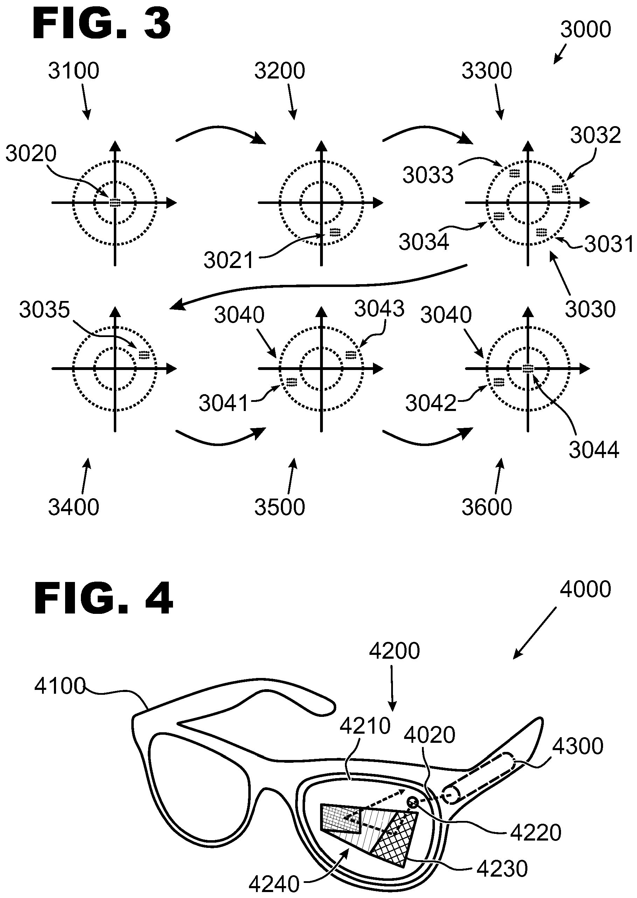

FIG. 1 depicts a partial orthographic top view of a display structure 1000 according to an embodiment, FIG. 2 shows a k-vector diagram 2000 illustrating the operating principles of the display structure 1000, and FIG. 3 depicts a plurality of k-vector diagrams 3000 for further illustrating the effect of various diffraction events related to the operation of the display structure 1000. In other embodiments, a display structure may be identical, similar, or different to the display structure 1000 of the embodiment of FIGs. 1 to 3.

In the embodiment of FIGs. 1 to 3, the display structure 1000 comprises a waveguide 1100. In Fig. 1, the waveguide 1100 extends parallel to the plane of the figure.

In the embodiment of FIGs. 1 to 3, the waveguide 1100 may have a refractive index of approximately 2 throughout the visible spectrum. In other embodiments, a waveguide may have any suitable refractive index with any suitable dispersive properties.

The waveguide 1100 may be surrounded by air with a refractive index of approximately 1 throughout the visible spectrum. Consequently, light may be guided within the waveguide 1100 between opposite air-glass interfaces. In other embodiments, light may be guided within a waveguide between any suitable interfaces, for example, air-glass interfaces.

In the embodiment of FIGs. 1 to 3 the display structure 1000 comprises an in-coupling structure 1200.

Throughout this disclosure, an "in-coupling structure" may refer to a structure suitable for or configured to couple a set of input beams into a waveguide. Generally, an in-coupling structure may comprise, for example, one or more diffractive optical elements, such as diffraction gratings; and/or one or more reflective optical elements, such as mirrors; and/or one or more refractive optical elements, such as prisms.

As schematically depicted in FIG. 1, the in-coupling structure 1200 of the embodiment of FIGs. 1 to 3 is configured to couple a set of input beams 1020 into the waveguide 1100 as a set of in-coupled beams 1021.

Herein, a "set of input beams" may refer to a set of optical beams directed to an in-coupling structure and corresponding to at least part of an input image. Additionally or alternatively, a set of input beams may refer to a set of optical beams propagating towards an in-coupling structure of a display structure from a solid angle defining a field of view of said display structure. Additionally of alternatively, a set of input beams may refer to a set of optical beams associated with a set of input k-vectors.

Further, a "set of in-coupled beams" may refer to a set of optical beams coupled into a waveguide by an in-coupling structure. Additionally or alternatively, a set of in-coupled beams may refer to a set of optical beams corresponding to an image and propagating in guided manner within a waveguide. Additionally of alternatively, a set of in-coupled beams may refer to a set of optical beams associated with a set of in-coupled k-vectors lying in a guided propagation domain associated with a waveguide.

The set of input beams 1020 and the set of in-coupled beams 1021 of the embodiment of FIGs. 1 to 3 are associated with a set of input k-vectors 3020 and a set of in-coupled k-vectors 3021, respectively.

In the plurality of k-vector diagrams 3000 of FIG. 3, the set of input k-vectors 3020 is schematically illustrated as a set of points in a first k-vector diagram 3100, the set of in-coupled k-vectors 3021 is schematically illustrated as a set of points in a second k-vector diagram 3200, and the coupling of the set of input beams 1020 into the waveguide 1100 as the set of in-coupled beams 1021 is represented schematically as an arrow extending from the first k-vector diagram 3100 to the second k-vector diagram 3200.

As is evident based on FIGs. 2 and 3, the set of input k-vectors 3020 and the set of in-coupled k-vectors 3021 lie in an in-coupling domain 2100 and in a first domain 2310, respectively. The first domain 2310 is situated inside an annular guided propagation domain 2001 associated with the waveguide 1100, whereas the in-coupling domain 2100 lies in a coupling domain 2002 surrounded by the guided propagation domain 2001.

Herein, a "first domain" may refer to a domain in k-space situated within a guided propagation domain associated with a waveguide. Additionally or alternatively, a first domain may refer to a domain in k-space defined by a set of in-coupled k-vectors coupled into a waveguide by an in-coupling structure. Herein, "a domain in k-space defined by a set of in-coupled k-vectors" may refer to a smallest non-empty connected open set within a guided propagation domain associated with a waveguide comprising each of the points representing said set of in-coupled k-vectors.

In the embodiment of FIGs. 1 to 3, the in-coupling domain 2100 is arranged centrally in the coupling domain 2002. In other embodiments, an in-coupling domain may be arranged in a coupling domain in any suitable manner, for example, centrally or off-centrally.

In the embodiment of FIGs. 1 to 3, the display structure 1000 further comprises a diffractive exit pupil expansion structure 1300.

In this specification, a structure being "diffractive" may refer to said structure comprising a diffractive optical element. Herein, a "diffractive optical element", may refer to an optical element the operation of which is based on diffraction of light. Generally, a diffractive optical element may comprise structural features with at least one dimension of the order of the wavelengths of visible light, for example, at least one dimension less than one micrometer. Typical examples of diffractive optical elements include diffraction gratings, e.g., one- and two-dimensional diffraction gratings, which may be implemented as single-region diffraction gratings or as multi-region diffraction gratings. Diffraction gratings may generally be implemented, at least, as surface relief diffraction gratings or volume holographic diffraction gratings, and they may be configured to function as transmission- and/or reflection-type diffraction gratings.

Further, "exit pupil expansion", or "EPE", may refer to a process of distributing light within a waveguide in a controlled manner so as to expand the portion of said waveguide wherefrom out-coupling of light occurs. Generally, exit pupil expansion may be accomplished in waveguide-based display structure using so-called "pupil replication" schemes, wherein a plurality of exit sub-pupils are formed in a waveguide. Consequently, an "exit pupil expansion structure" may refer to a structure suitable or configured for exit pupil expansion, for example, by pupil replication.

As schematically depicted in FIG. 1, exit pupil expansion structure 1300 configured to receive the set of in-coupled beams 1021 and to diffract the set of in-coupled beams 1021 to form at least three sets of guided beams 1030.

In the embodiment of FIGs. 1 to 3, the at least three sets of guided beams 1030 are associated with at least three sets of k-vectors 3030. In the plurality of k-vector diagrams 3000 of FIG. 3, the at least three sets of k-vectors 3030 are depicted as a plurality of sets of points in a third k-vector diagram 3300, and the diffraction of the set of in-coupled beams 1021 by the exit pupil expansion structure 1300 to form the at least three sets of guided beams 1030 is represented schematically as an arrow extending from the second k-vector diagram 3200 to the third k-vector diagram 3300.

In the embodiment of FIGs. 1 to 3, the display structure 1000 further comprises a diffractive retardation and out-coupling structure 1400.

Herein, a "retardation and out-coupling structure" may refer to a structure configured both to diffract light received from an exit pupil expansion structure back towards said exit pupil expansion structure and to couple such light out of a waveguide. Additionally or alternatively, a retardation and out-coupling structure may refer to a structure configured to diffract a diffracted set of beams received from an exit pupil expansion structure to form at least one returning set of beams guided towards said exit pupil expansion structure and associated with at least one returning set of k-vectors, said structure comprising an out-coupling grating configured to couple light out of the waveguide as a set of output beams.

The diffractive retardation and out-coupling structure 1400 of the embodiment of FIGs. 1 to 3 is configured to receive from the exit pupil expansion structure 1300 a diffracted set of beams 1035 associated with a diffracted set of k-vectors 3035 depicted as a set of points in a fourth k-vector diagram 3400 of the plurality of k-vector diagrams 3000 of FIG. 3.

The retardation and out-coupling structure 1400 of the embodiment of FIGs. 1 to 3 comprises an out-coupling grating 1420 configured to couple light out of the waveguide 1100 as a set of output beams 1044 associated with a set of output k-vectors 3044.

In the embodiment of FIGs. 1 to 3, the retardation and out-coupling structure 1400 is further configured to diffract the diffracted set of beams 1035 to form at least one returning set of beams 1040 guided towards the exit pupil expansion structure 1300 and associated with at least one returning set of k-vectors 3040, each of the at least one returning set of k-vectors 3040 lying in any of the at least three domains 2300 other than the one of the at least three domains 2300, wherein the diffracted set of k-vectors 3035 lies.

In other embodiments, a retardation and out-coupling structure may be configured to diffract a diffracted set of beams, which is received from an exit pupil expansion structure and is associated with a diffracted set of k-vectors lying in one of at least three domains, to form at least one returning set of beams, which is guided towards the exit pupil expansion structure and is associated with at least one returning set of k-vectors, each of the at least one returning set of k-vectors lying in any other of the at least three domains. Generally, configuring a retardation and out-coupling structure of a display structure in such a manner may reduce so-called "EPE interference", i.e., unpredictable changes of image brightness across an image displayed by the display structure, which is caused by interference of replicated optical beams guided via different paths to the same position at an out-coupling grating.

In the plurality of k-vector diagrams 3000 of FIG. 3, the set of output k-vectors 3044 is depicted as a set of points in a sixth k-vector diagram 3600, and the coupling of light out of the waveguide 1100 is represented by a curved arrow extending from a fifth k-vector diagram to the sixth k-vector diagram 3600. As is evident based on FIGs. 2 and 3, the set of output k-vectors 3044 lies in an out-coupling domain 2200, which is situated inside the coupling domain 2002. In the k-vector diagram 2000 FIG. 2, the coupling of light out of the waveguide 1100 is represented as a second primary out-coupling grating k-vector ( ${G}_{OC}^{21}$) extending from a center of a second domain 2320 to a center of the out-coupling domain 2200.

In the embodiment of FIGs. 1 to 3, the out-coupling domain 2200 is arranged centrally in the coupling domain 2002. In other embodiments, an out-coupling domain may be arranged in a coupling domain in any suitable manner, for example, centrally or off-centrally. In some embodiments, an out-coupling domain may be aligned with an in-coupling domain.

As shown in FIGs. 2 and 3, the at least three sets of guided beams 1030 of the embodiment of FIGs. 1 to 3 comprise a first set of guided beams 1031, a second set of guided beams 1032, a third set of guided beams 1033, and a fourth set of guided beams 1034. In other embodiments, at least three sets of guided beams formed by an exit pupil expansion structure may comprise any suitable number of sets of guided beams, for example, three, four, five, six, etc., sets of guided beams.

In the embodiment of FIGs. 1 to 3, first set of guided beams 1031, a second set of guided beams 1032, a third set of guided beams 1033, and a fourth set of guided beams 1034 lie in the first domain 2310, the second domain 2320, a third domain 2330, and a fourth domain 2340, respectively.

The first domain 2310, the second domain 2320, the third domain 2330, and the fourth domain 2340 of the embodiment of FIGs. 1 to 3 are mutually disjoint. Generally, in embodiments, wherein an exit pupil expansion structure is configured to receive a set of in-coupled beams and to diffract said set of in-coupled beams to form at least three sets of guided beams associated with at least three sets of k-vectors lying in at least three domains including a first domain, said at least three domains may be mutually disjoint, i.e., pairwise disjoint.

In the embodiment of FIGs. 1 to 3, the diffracted set of k-vectors 3035 lies in the second domain 2320, and each of the at least one returning set of k-vectors 3040 lies in the fourth domain 2340. In other embodiments, a diffracted set of k-vectors may or may not lie in a second domain and/or each of at least one returning set of k-vectors may or may not lie in a fourth domain. Generally, a diffracted set of k-vectors may lie in any one of at least three domains, and each of at least one returning set of k-vectors may lie in any other of said at least three domains. In some embodiments, wherein an in-coupling structure is configured to couple a set of input beams into a waveguide as a set of in-coupled beams associated with a set of in-coupled k-vectors defining a first domain, a diffracted set of k-vectors may lie in said first domain. In other embodiments, a diffracted set of k-vectors may lie in any of at least three domains other than such first domain.

In the embodiment of FIGs. 1 to 3, the exit pupil expansion structure 1300 comprises a two-dimensional exit pupil expansion grating 1310 for diffracting the set of in-coupled beams 1021 to form the at least three sets of guided beams 1030. Generally, an exit pupil expansion structure comprising a two-dimensional exit pupil expansion grating for such use may facilitate designing and/or fabricating the exit pupil expansion structure.

In other embodiments, a diffractive exit pupil expansion structure may comprise any suitable means, e.g., a two-dimensional exit pupil expansion grating, for diffracting a set of in-coupled beams to form at least three sets of guided beams. In some embodiments, an exit pupil expansion structure may comprise a first one-dimensional grating and a second one-dimensional grating at least partly overlapping the first one-dimensional grating for diffracting a set of in-coupled beams to form at least three sets of guided beams, e.g., a first set of guided beams, a second set of guided beams, a third set of guided beams, and a fourth set of guided beams.

In the embodiment of FIGs. 1 to 3, the exit pupil expansion structure 1300 is configured to further increase the number of diffracted beams by diffracting the at least three sets of guided beams 1030. Generally, an exit pupil expansion structure being configured to further increase number of diffracted beams by diffracting a first set of guided beams and a second set of guided beams may facilitate reducing spatial image brightness variations throughout an out-coupling structure. Additionally or alternatively, an exit pupil expansion structure being configured in such a manner may help to further reduce EPE interference, especially when a retardation and out-coupling structure is configured to diffract a diffracted set of beams to form at least one returning set of beams guided towards said exit pupil expansion structure. In other embodiments, an exit pupil expansion structure may or may not be configured in such a manner.

In the embodiment of FIGs. 1 to 3, the guided propagation domain 2001 surrounds a k-space origin representing optical beams propagating along a thickness direction of the waveguide 1100; each of the first domain 2310, the second domain 2320, the third domain 2330, and the fourth domain 2340 has a characteristic point, e.g., a centroid; and a closed polygonal chain having the characteristic points as its vertices surrounds the k-space origin. Generally, at least three sets of guided beams being arranged around a k-space origin in such a manner may further reduce EPE interference, for example, due to pupil replication throughout the lateral extent of an exit pupil expansion structure or an exit pupil expansion grating. In other embodiments, wherein a guided propagation domain surrounds a k-space origin representing optical beams propagating along a thickness direction of a waveguide and each of at least three domains have a characteristic point, e.g., a centroid, a closed polygonal chain having said characteristic points as its vertices may or may not surround said k-space origin. For example, in some such embodiments, said k-space origin may be arranged on an edge of such polygonal chain.

In the embodiment of FIGs. 1 to 3, the exit pupil expansion grating 1310 is configured to form each of the at least three sets of guided beams 1030 by zeroth-order diffraction, by first-order diffraction, or by combined first-order diffraction. Generally, an exit pupil expansion grating being configured in such a manner may facilitate reducing optical losses related to exit pupil expansion.

More specifically, in the k-vector diagram 2000 of FIG. 2, the diffraction of the set of in-coupled beams 1021 by the exit pupil expansion structure 1300 to form the first set of guided beams 1031 could be represented as a zero k-vector, the diffraction of the set of in-coupled beams 1021 by the exit pupil expansion structure 1300 to form the second set of guided beams 1032 is represented as a fundamental primary exit pupil expansion grating k-vector ( ${G}_{EPE}^{1}$) extending from a center of the first domain 2310 to the center of the second domain 2320, and the diffraction of the set of in-coupled beams 1021 by the exit pupil expansion structure 1300 to form the fourth set of guided beams 1034 is represented as a fundamental secondary exit pupil expansion grating k-vector ( ${G}_{EPE}^{2}$) extending from the center of the first domain 2310 to a center of the fourth domain 2340. Further, diffraction of the set of in-coupled beams 1021 by the exit pupil expansion structure 1300 to form the third set of guided beams 1033 could be represented as a combined first-order grating k-vector ${G}_{EPE}^{1} + {G}_{EPE}^{2}$. In other embodiments, diffraction by an exit pupil expansion structure may be representable by any suitable grating k-vectors, for example, by such primary exit pupil expansion grating k-vector, such secondary exit pupil expansion grating k-vector, and/or such combined first-order grating k-vector.

Herein, a "grating k-vector" may refer to a vector in k-space representing the effect of a diffractive optical element on the propagation direction of an optical beam represented by a k-vector. Additionally or alternatively, a grating k-vector associated with a diffractive optical element may refer to a vector in k-space that may be added to an in-plane component of a k-vector associated with an optical beam in order to represent the effect of said diffractive optical element on the propagation of said optical beam.

Generally, diffractive optical elements may be utilized for coupling optical beams into and/or out of a waveguide and/or for altering the propagation direction of said optical beams within said waveguide. The magnitudes and directions of grating k-vectors representing the effect of a diffractive optical element are determined by the properties of said diffractive optical element. In particular, a fundamental grating vector may be associated with each periodicity direction of a diffractive optical element, the direction and magnitude of each fundamental grating vector being determined by the direction and period of said diffractive optical element in its associated periodicity direction. Higher order grating vectors of a diffractive optical element may then be expressed as integer linear combinations of the fundamental grating vectors of a diffractive optical element. For example, assuming that a diffractive optical element has a first periodicity in a first direction and a second periodicity in a second direction, a first fundamental grating vector **G**₁ and a second fundamental grating vector **G**₂ may be associated with the first direction and the second direction, and higher order grating vectors, such as **G**₁+**G**₂, **G**₁-**G**₂, -2**G**₁, and 3**G**₂, may be defined based on the fundamental grating vectors.

Throughout this specification, "Nth-order diffraction", e.g., first-order diffraction or second-order diffraction, may refer to positive Nth-order diffraction and/or negative Nth-order diffraction. Additionally or alternatively, a structure being configured to "diffract a set of beams by Nth-order diffraction" may refer to said structure being configured to diffract said set of beams in a manner representable by a grating k-vector ±N**G**_{f}, wherein **G**_{f} is a fundamental grating k-vector of a diffractive optical element of said structure.

Further, "combined Nth-order diffraction", e.g., combined first-order diffraction or combined second-order diffraction, may refer to diffraction representable by a grating vector ${\sum }_{i = 1}^{m} {a}_{i} N {G}_{i}$, wherein m is the number of fundamental grating k-vectors of a diffractive structure and aᵢ ∈ {-1, 0, 1} and aᵢ is non-zero for at least two values of i. For example, combined first-order diffraction by a structure with diffractive properties represented by grating vectors **G**₁ and **G**₂ may then refer to diffraction representable by any of grating vectors **G**₁+**G**₂, **G**₁-**G**₂, **-G**₁+**G**₂, and **-G**₁-**G**₂. Generally, combined Nth-order diffraction may refer to one or more diffraction events, e.g., one diffraction event or two successive diffraction events.

In the embodiment of FIGs. 1 to 3, the one of the at least three domains 2300, wherein the diffracted set of k-vectors 3035 lies, i.e., the second domain 2320, is arranged towards a first k-space direction 2010 from the coupling domain 2002, and the other of the at least three domains 2300, wherein each of the at least one returning set of k-vectors 3040 lies, i.e., the fourth domain 2340, is arranged towards a second k-space direction 2020 opposite to the first k-space direction 2010 from the coupling domain 2002. Generally, a diffracted set of k-vectors and each of at least one returning set of k-vectors lying in opposite domains in such a manner may facilitate guiding at least one returning set of beams back to an exit pupil expansion structure with reduced optical losses caused, for example, by passage of light by said exit pupil expansion structure. In other embodiments, wherein the one of at least three domains, wherein a diffracted set of k-vectors lies, is arranged towards a first k-space direction from the coupling domain, another of said at least three domains, wherein each of at least one returning set of k-vectors lies, may or may not be arranged towards a second k-space direction opposite to said first k-space direction from said coupling domain.

In the embodiment of FIGs. 1 to 3, the at least one returning set of beams 1040 comprises a first returning set of beams 1041. The retardation and out-coupling structure 1400 comprises a retardation grating 1410 configured to diffract the diffracted set of beams 1035 such that the first returning set of beams 1041 and a continuing set of beams 1043 are formed and guided towards the exit pupil expansion structure 1300 and the out-coupling grating 1420, respectively. Generally, a retardation and out-coupling structure comprising a retardation grating configured in such a manner may facilitate reducing EPE interference without considerably affecting the out-coupling properties of a retardation and out-coupling structure. Additionally or alternatively, a retardation and out-coupling structure comprising a retardation grating configured in such a manner may facilitate fabricating an out-coupling grating of a retardation and out-coupling structure. In other embodiments, at least one returning set of beams may or may not comprise a first returning set of beams, and a retardation and out-coupling structure may or may not comprise a retardation grating configured to diffract a diffracted set of beams such that said first returning set of beams and a continuing set of beams are formed and guided towards an exit pupil expansion structure and an out-coupling grating, respectively.

The at least one returning set of k-vectors 3040 of the embodiment of FIGs. 1 to 3 comprises a first returning set of k-vectors 3041, and the first returning set of beams 1041 is associated with the first returning set of k-vectors 3041. In other embodiments, wherein at least one returning set of beams comprises a first returning set of beams, at least one returning set of k-vectors may comprise a first returning set of k-vectors associated with said first returning set of beams.

In the plurality of k-vector diagrams 3000 of FIG. 3, the first returning set of k-vectors 3041 is depicted as sets of points in a fifth k-vector diagram 3500, and the diffraction of the diffracted set of beams 1035 to form the first returning set of beams 1041 is represented by the curved arrow extending from the fourth k-vector diagram 3400 to the fifth k-vector diagram 3500. As is evident based on FIGs. 2 and 3, the first returning set of k-vectors 3041 lies in the fourth domain 2340. In the k-vector diagram 2000 FIG. 2, the diffraction of light to form the first returning set of beams 1041 is represented as a retardation grating k-vector (G_{R}) extending from the center of the second domain 2320 to the center of the fourth domain 2340.

In the embodiment of FIGs. 1 to 3, the retardation grating 1410 is implemented as a one-dimensional grating and configured to form the first returning set of beams 1041 by first-order diffraction and the continuing set of beams by zeroth-order diffraction. Generally, a retardation grating being implemented as a one-dimensional grating and configured to form a first returning set of beams by first-order diffraction and a continuing set of beams by zeroth-order diffraction may facilitate avoiding undesired leakage of light from a waveguide. Additionally or alternatively, a retardation grating being implemented and configured in such a manner may facilitate fabrication of a retardation and out-coupling structure. In other embodiments, a retardation grating may or may not be implemented and configured in such a manner. For example, in some embodiments, a retardation grating may be implemented as a two-dimensional grating and configured to form a first returning set of beams by first-order diffraction along a first periodicity direction and a continuing set of beams by zeroth-order diffraction. In such embodiments, such retardation grating may be configured to prevent diffraction of light along one or more additional periodicity directions intersecting said first periodicity direction.

In the embodiment of FIGs. 1 to 3, the out-coupling grating 1420 is implemented as a two-dimensional grating. In other embodiments, an out-coupling grating may or may not be implemented as a two-dimensional grating. For example, in some embodiments, a retardation and out-coupling structure may comprise one or more one-dimensional out-coupling gratings.

In the embodiment of FIGs. 1 to 3, the at least one returning set of beams 1040 comprises a second returning set of beams 1042, and the out-coupling grating 1420 is configured to diffract light towards the exit pupil expansion structure 1300 as the second returning set of beams 1042. Generally, an out-coupling grating being configured to diffract light towards the exit pupil expansion structure as the second returning set of beams in addition to being configured to couple light out of the waveguide may enable reducing EPE interference with reduced waveguide footprint. In other embodiments, at least one returning set of beams may or may not comprise a second returning set of beams, and an out-coupling grating may or may not be configured to diffract light towards an exit pupil expansion structure as said second returning set of beams. In such embodiments, said light may typically originate from a set of input beams. In other embodiments, wherein an out-coupling grating is configured to diffract light towards an exit pupil expansion structure as a second returning set of beams, said out-coupling grating may be implemented in any suitable manner, for example, as a two-dimensional grating.

In the embodiment of FIGs. 1 to 3, the retardation and out-coupling structure 1400 comprises the retardation grating 1410 for forming the first returning set of beams 1041 and the out-coupling grating 1420 for forming the second returning set of beams 1042, whereby the at least one returning set of beams 1040 comprises both the first returning set of beams 1041 and the second returning set of beams 1042. Generally, at least one returning set of beams comprising a first returning set of beams and a second returning set of beams may facilitate reducing EPE interference. In other embodiments, a retardation and out-coupling structure may or may not comprise a retardation grating for forming a first returning set of beams and/or an out-coupling grating for forming a second returning set of beams.

The out-coupling grating 1420 of the embodiment of FIGs. 1 to 3 is configured to diffract light specifically from the continuing set of beams 1043 towards the exit pupil expansion structure 1300 as the second returning set of beams 1042. In other embodiments, wherein an out-coupling grating is configured to diffract light towards an exit pupil expansion structure as a second returning set of beams, said light may originate from any suitable source, for example, from a set of input beams, and/or be guided to said out-coupling grating from any suitable element(s), for example, from an exit pupil expansion structure and/or from a retardation grating.

The at least one returning set of k-vectors 3040 of the embodiment of FIGs. 1 to 3 comprises a second returning set of k-vectors 3042, and the second returning set of beams 1042 is associated with the second returning set of k-vectors 3042. In other embodiments, wherein at least one returning set of beams comprises a second returning set of beams, at least one returning set of k-vectors may comprise a second returning set of k-vectors associated with said second returning set of beams.

In the plurality of k-vector diagrams 3000 of FIG. 3, the second returning set of k-vectors 3042 is depicted as sets of points in the sixth k-vector diagram 3600, and the diffraction to form the second returning set of k-vectors 3042 is represented by the curved arrow extending from the fifth k-vector diagram 3500 to the sixth k-vector diagram 3600. As is evident based on FIGs. 2 and 3, the second returning set of k-vectors 3042 lies in the fourth domain 2340. In the k-vector diagram 2000 FIG. 2, the diffraction to form the second returning set of k-vectors 3042 is represented as a first primary out-coupling grating k-vector ( ${G}_{OC}^{11}$) extending from the center of the second domain 2320 to the center of the fourth domain 2340.

In the embodiment of FIGs. 1 to 3, the out-coupling grating 1420 comprises a plurality of first structural motifs and a plurality of second structural motifs. As shown in a magnified inset in FIG. 1, each first structural motif 1421 of the plurality of first structural motifs has along a primary direction 1401 a first length (l₁) for forming the second returning set of beams 1042 by first order diffraction, and each second structural motif 1422 of the plurality of second structural motifs has along the primary direction 1401 a second length (l₂) higher than the first length (l₁) for forming the set of output beams 1044 by first order diffraction. Generally, an out-coupling grating comprising such plurality of first structural motifs and such plurality of second structural motifs may enable concurrently diffracting light towards the exit pupil expansion structure as a second returning set of beams and coupling light out of a waveguide as a set of output beams. Additionally or alternatively, an out-coupling grating comprising such plurality of first structural motifs and such plurality of second structural motifs may provide increased flexibility in designing said out-coupling grating with specific out-coupling and retardation characteristics. In other embodiments, an out-coupling grating may or may not comprise a plurality of first structural motifs and a plurality of second structural motifs, each first structural motif of said plurality of first structural motifs having along a primary direction a first length for forming a second returning set of beams by first order diffraction and each second structural motif of said plurality of second structural motifs having along said primary direction a second length higher than said first length for forming a set of output beams by first order diffraction.

In the embodiment of FIGs. 1 to 3, l₁ is one half of l₂. Generally, a first length of first structural motifs being definable as a simple fraction, e.g., one half, one third, etc. or two thirds, two fifths, two sevenths, etc., of a second length of second structural motifs may facilitate reducing undesired stray diffraction events in a display structure. Additionally or alternatively, a first length of first structural motifs being definable as a simple fraction of a second length of second structural motifs may facilitate arranging said first structural motifs and said second structural motifs in a regular interspersed two-dimensional pattern. In other embodiments a first length may or may not be definable as a simple fraction of a second length.

In the embodiment of FIGs. 1 to 3, l₁ may be approximately 185 nanometers (nm), and l₂ may be approximately 370 nm. In other embodiments, each first structural motif of a plurality of first structural motifs may have along a primary direction any suitable first length, for example, a first length greater than or equal to 150 nm, or to 155 nm, or to 160 nm, or to 165 nm, or to 170 nm and/or less than or equal to 235 nm, or to 230 nm, or to 225 nm, or to 220 nm. In said other embodiments, each second structural motif of a plurality of second structural motifs may have along said primary direction any suitable second length, for example, a second length greater than or equal to 300 nm, or to 310 nm, or to 320 nm, or to 330 nm, or to 340 nm and/or less than or equal to 470 nm, or to 460 nm, or to 450 nm, or to 440 nm.

In the embodiment of FIGs. 1 to 3, each first structural motif 1421 of the plurality of first structural motifs is rectangular and has a first width (w₁) along a secondary direction 1402 perpendicular to the primary direction 1401, and each second structural motif 1422 of the plurality of second structural motifs is rectangular and has a second width (w₂) along the secondary direction (1402). The sum w₁ + w₂ is selected such that diffraction of light received by the out-coupling grating 1420 is prevented along the secondary direction 1402. Generally, first structural motifs and second structural motifs having such first widths and second widths, respectively, may reduce or prevent leakage of light from a waveguide. In other embodiments, first structural motifs and second structural motifs may or may not have such first widths and second widths, respectively.

Herein, "light received by a out-coupling grating" may refer to light originating from any suitable source, for example, from a set of input beams. When a set of input beams is directed to an in-coupling structure by an optical engine light received by a retardation and out-coupling structure may refer to light originating from light emitted by said optical engine and coupled into a waveguide by said in-coupling structure. Additionally or alternatively, light received by a retardation and out-coupling structure may herein refer to light guided to said out-coupling grating from any suitable element(s), for example, from an exit pupil expansion structure and/or from a retardation grating.

Further, a sum of a first width and a second width being "selected such that diffraction of light received by an out-coupling grating is prevented" may refer to said width defining a fundamental grating k-vector, said fundamental grating k-vector having a specific direction and a specific magnitude such that diffraction of light, which is associated with a specific set of k-vectors lying in a specific domain in k-space associated with a waveguide and which is received by an out-coupling grating, in manners representable by said fundamental grating k-vector and inverse thereof would form two specific sets of diffracted k-vectors, both of said two specific sets of diffracted k-vectors lying outside of a guided propagation domain associated with said waveguide.

For example, in the embodiments of FIGs. 1 to 3, light received by the out-coupling grating 1420, i.e., the continuing set of beams 1043, is associated with the continuing set of k-vectors 3043, which lies in the second domain 2320, and the sum w₁ + w₂ defines a secondary out-coupling grating k-vector ( ${G}_{OC}^{2}$) having a direction and length such that diffraction of the continuing set of k-vectors 3043 in manners representable by ${G}_{OC}^{2}$ and - ${G}_{OC}^{2}$ would form two specific sets of diffracted k-vectors lying outside of the guided propagation domain 2001 as indicated by two dashed domains in FIG. 2.

In the embodiment of FIGs. 1 to 3, w₁ and w₂ may be approximately equal, and both w₁ and w₂ may be approximately 100 nm. In other embodiments, wherein a sum of a first width of first structural motifs and a second width of second structural motifs is selected such that diffraction of light received by an out-coupling grating is prevented along a secondary direction, said first width and said second width may or may not be equal or approximately equal. In said other embodiments, any suitable first widths and second widths, for example, a first width and/or a second width greater than or equal to 80 nm, or to 90 nm and/or less than or equal to 120 nm, or to 110 nm, or to 100 nm may be used.

In the embodiment of FIGs. 1 to 3, the first structural motifs 1421 of the plurality of first structural motifs and the second structural motifs 1422 of the plurality of second structural motifs are arranged in a regular interspersed two-dimensional pattern. Generally, arranging first structural motifs of a plurality of first structural motifs and second structural motifs of a plurality of second structural motifs in such a manner may facilitate in reducing spatial image brightness variations. Additionally or alternatively, arranging first structural motifs of a plurality of first structural motifs and second structural motifs of a plurality of second structural motifs in a regular interspersed two-dimensional pattern may facilitate reducing undesired stray diffraction events in a display structure.

In the embodiment of FIGs. 1 to 3, the in-coupling structure 1200 comprises an in-coupling grating 1210 for coupling the set of input beams 1020 into the waveguide 1100. Generally, an in-coupling structure comprising an in-coupling grating may facilitate reducing a mass of a display structure. In other embodiments, an in-coupling structure may comprise any suitable elements, for example, an in-coupling grating, and/or an in-coupling mirror, and/or an in-coupling prism.

Due to dispersive properties of typical diffractive optical elements used in waveguide-based display structures, a first set of k-vectors of a first wavelength and a second set of k-vectors of a second wavelength greater than said first wavelength may commonly be diffracted differently to one another. In particular, due to its higher wavelength, such second set of k-vectors is typically diffracted more strongly than such first set of k-vectors. Using k-space formalism, it can be stated that grating k-vectors representing the diffractive properties of typical diffractive optical elements are wavelength-dependent such that magnitudes of said grating k-vectors increase with increased wavelength. Generally, such wavelength-dependence may be accounted for by utilization of in-coupling, exit-pupil-expansion, retardation, and/or out-coupling schemes, wherein the dispersive properties of diffractive optical elements used in such schemes compensate each other such that out-coupled images exhibit minimal dispersion. For example, the display structure 1000 may be configured for multi-color operation in such a manner. In other embodiments, a display structure may or may not be configured for multi-color operation in such a manner. In embodiments, wherein diffractive structures are configured to compensate for dispersion effects, such compensation may occur at two or more visible wavelengths, e.g., at two, three, or four visible wavelengths. Generally, such two or more visible wavelengths may comprise any two or more wavelengths selected in a wavelength range from 300 nm to 750 nm, for example, two or more wavelengths selected from a list consisting of 300 nm, 301 nm, 302 nm, ..., 748 nm, 749 nm, and 750 nm.

It is to be understood that the embodiments of the first aspect described above may be used in combination with each other. Several of the embodiments may be combined together to form a further embodiment.

Above, mainly features of display structures and elements thereof are discussed. In the following, more emphasis will lie on features related to display devices and vehicles comprising display devices. What is said above about the ways of implementation, definitions, details, and advantages related to display structures and elements thereof applies, mutatis mutandis, to the aspects discussed below. The same applies vice versa.

FIG. 4 depicts a display device 4000 according to an embodiment. The embodiment of FIG. 4 may be in accordance with any of the embodiments disclosed with reference to or in conjunction with any of FIGs. 1 to 3. Additionally or alternatively, although not explicitly shown in FIG. **4****,** the embodiment of FIG. 4 or any part thereof may generally comprise any features and/or elements of the embodiment of FIGs. 1 to **3****.**

In the embodiment of FIG. **4****,** the display device 4000 is implemented as a head-mounted see-through display device, more specifically, as spectacles comprising a see-through display. In other embodiments, a display device may be implemented in any suitable manner, for example, as a portable display device and/or as a vehicular display device, which may or may not be further implemented as a see-through display device. In some embodiments, a display device may be implemented specifically as a head-mounted display device.

In the embodiment of FIG. 4, the display device 4000 comprises a frame 4100 and a display structure 4200 according to the first aspect supported by the frame 4100. The display structure 4200 comprises a waveguide 4210, an in-coupling structure 4220, an exit pupil expansion structure 4230, and a retardation and out-coupling structure 4240. In other embodiments, display device may or may not comprise a frame for supporting a display structure.

As shown in FIG. 4, the display device 4000 further comprises a laser-scanning optical engine 4300 for directing the set of input beams 4020 to the in-coupling structure 4220. In other embodiments, a display device may or may not comprise a scanner-based optical engine, e.g., a laser-scanning optical engine, for directing a set of input beams to an in-coupling structure.

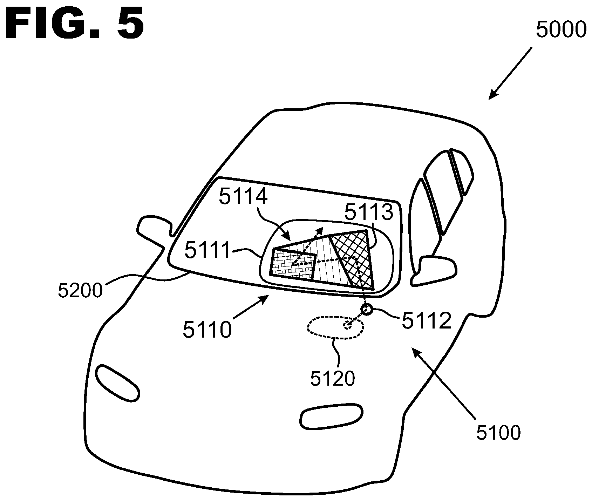

FIG. 5 schematically depicts a vehicle 5000 according to an embodiment. In the embodiment of FIG. 5, the vehicle 5000 is implemented as a car. In other embodiments, a vehicle may or may not be implemented as a car. For example, in some embodiments, a vehicle may be implemented as a motor vehicle, such as a car, a truck, a motorcycle, or a bus; a railed vehicle, such as a train or a tram; a piece of heavy machinery, such as a tractor or a harvester; a watercraft, such as a ship or a boat; an aircraft, such as an airplane or helicopter; or a spacecraft, such as a space capsule or a spaceplane.

In the embodiment of FIG. 5, the vehicle 5000 comprises a vehicular display device 5100 in accordance with the second aspect. Even if not explicitly shown in FIG. 5, the embodiment of FIG. 5 or any part thereof may generally comprise any features and/or elements disclosed with reference to or in conjunction with any of FIGs. 1 to 4.

The vehicular display device 5100 of the embodiment of FIG. 5 comprises a display structure 5110 in accordance with the first aspect and an optical engine 5120. The display structure 5110 comprises a waveguide 5111, an in-coupling structure 5112, an exit pupil expansion structure 5113, and retardation and out-coupling structure 5114. In other embodiments, a vehicular display device may or may not comprise an optical engine.

The vehicular display device 5100 of the embodiment of FIG. 5 is implemented as a head-up display device. In other embodiments, a display device may or may not be implemented as a head-up display device.

Herein, a "head-up display device" may refer to a see-through vehicular display device configured to present images and/or data to a steerer, e.g., a driver or a pilot, of a vehicle without requiring said steerer to look away from usual viewpoints thereof. Generally, a head-up display device may or may not be implemented as a vehicle-mounted display device.

In the embodiment of FIG. 5, the vehicle 5000 further comprises a laminated window 5200, and the waveguide 5111 extends within the window 5200. In other embodiments, one or more waveguides may be arranged in any suitable manner (s). In some embodiments, a waveguide may extend within a laminated window, such as a windshield. In some embodiments, a vehicle may comprise a vehicular display device comprising a waveguide arranged at a distance from a window.

It is obvious to a person skilled in the art that with the advancement of technology, the basic idea of the invention may be implemented in various ways. The invention and its embodiments are thus not limited to the examples described above, instead they may vary within the scope of the claims.

It will be understood that any benefits and advantages described above may relate to one embodiment or may relate to several embodiments. The embodiments are not limited to those that solve any or all of the stated problems or those that have any or all of the stated benefits and advantages.

The term "comprising" is used in this specification to mean including the feature(s) or act(s) followed thereafter, without excluding the presence of one or more additional features or acts. It will further be understood that reference to 'an' item refers to one or more of those items.

### REFERENCE SIGNS

k = k**v̂** k-vector
k wavenumber
n refractive index
**v̂** unit vector
**G**_{IC} in-coupling grating k-vector
${G}_{EPE}^{1}$ primary exit pupil expansion grating k-vector
${G}_{EPE}^{2}$ secondary exit pupil expansion grating k-vector
**G**_{R} retardation grating k-vector
${G}_{OC}^{11}$ first primary out-coupling grating k-vector
${G}_{OC}^{21}$ second primary out-coupling grating k-vector
${G}_{OC}^{2}$ secondary out-coupling grating k-vector
l₁ first length
l₂ second length
w₁ first width
w₂ second width
1000 display structure
1020 set of input beams
1021 set of in-coupled beams
1030 at least three sets of guided beams
1031 first set of guided beams
1032 second set of guided beams
1033 third set of guided beams
1034 fourth set of guided beams
1035 diffracted set of beams
1040 at least one returning set of beams
1041 first returning set of beams
1042 second returning set of beams
1043 continuing set of beams
1044 set of output beams
1100 waveguide
1200 in-coupling structure
1210 in-coupling grating
1300 exit pupil expansion structure
1310 exit pupil expansion grating
1400 retardation and out-coupling structure
1401 primary direction
1402 secondary direction
1410 retardation grating
1420 out-coupling grating
1421 first structural motif
1422 second structural motif
2000 k-vector diagram
2001 guided propagation domain
2002 coupling domain
2010 first k-space direction
2020 second k-space direction
2100 in-coupling domain
2200 out-coupling domain
2300 at least three domains
2310 first domain
2320 second domain
2330 third domain
2340 fourth domain
3000 plurality of k-vector diagrams
3020 set of input k-vectors
3021 set of in-coupled k-vectors
3030 at least three sets of k-vectors
3031 first set of k-vectors
3032 second set of k-vectors
3033 third set of k-vectors
3034 fourth set of k-vectors
3035 diffracted set of k-vectors
3040 at least one returning set of k-vectors
3041 first returning set of k-vectors
3042 second returning set of k-vectors
3043 continuing set of k-vectors
3044 set of output k-vectors
3100 first k-vector diagram
3200 second k-vector diagram
3300 third k-vector diagram
3400 fourth k-vector diagram
3500 fifth k-vector diagram
3600 sixth k-vector diagram
4000 display device
4020 set of input beams
4100 frame
4200 display structure
4210 waveguide
4220 in-coupling structure
4230 exit pupil expansion structure
4240 retardation and out-coupling structure
4300 optical engine
5000 vehicle
5100 vehicular display device
5110 display structure
5111 waveguide
5112 in-coupling structure
5113 exit pupil expansion structure
5114 retardation and out-coupling structure
5120 optical engine
5200 window

## Claims

1. A display structure (1000), comprising:
- a waveguide (1100);
- an in-coupling structure (1200) configured to couple a set of input beams (1020) into the waveguide (1100) as a set of in-coupled beams (1021) associated with a set of in-coupled k-vectors (3021) defining a first domain (2310) in k-space in an annular guided propagation domain (2001) associated with the waveguide (1100);
- a diffractive exit pupil expansion structure (1300) configured to receive the set of in-coupled beams (1021) and to diffract the set of in-coupled beams (1021) to form at least three sets of guided beams (1030) associated with at least three sets of k-vectors (3030) lying in at least three domains (2300) including the first domain (2310); and
- a diffractive retardation and out-coupling structure (1400) configured to receive from the exit pupil expansion structure (1300) a diffracted set of beams (1035) associated with a diffracted set of k-vectors (3035) lying in one of the at least three domains (2300), the diffractive retardation and out-coupling structure (1400) comprising an out-coupling grating (1420) configured to couple light out of the waveguide (1100) as a set of output beams (1044);
wherein the retardation and out-coupling structure (1400) is configured to diffract the diffracted set of beams (1035) to form at least one returning set of beams (1040) guided towards the exit pupil expansion structure (1300) and associated with at least one returning set of k-vectors (3040), each of the at least one returning set of k-vectors (3040) lying in any other of the at least three domains (2300),
wherein the at least one returning set of beams (1040) comprises a second returning set of beams (1042), and the out-coupling grating (1420) is configured to diffract light towards the exit pupil expansion structure (1300) as the second returning set of beams (1042), and
**characterized in that**
the out-coupling grating (1420) comprises a plurality of first structural motifs and a plurality of second structural motifs, each first structural motif (1421) of the plurality of first structural motifs has along a primary direction (1401) a first length, l₁, for forming the second returning set of beams (1042) by first order diffraction, and each second structural motif (1422) of the plurality of second structural motifs has along the primary direction (1401) a second length, l₂, higher than the first length, l₁, for forming the set of output beams (1044) by first order diffraction.

2. A display structure (1000) according to claim 1, wherein the exit pupil expansion structure (1300) comprises a two-dimensional exit pupil expansion grating (1310) for diffracting the set of in-coupled beams (1021) to form the at least three sets of guided beams (1030).

3. A display structure (1000) according to claim 2, wherein the exit pupil expansion grating (1310) is configured to form each of the at least three sets of guided beams (1030) by zeroth-order diffraction, by first-order diffraction, or by combined first-order diffraction.

4. A display structure (1000) according to any of the preceding claims, wherein the guided propagation domain (2001) surrounds a coupling domain (2002), the one of the at least three domains (2300) is arranged towards a first k-space direction (2010) from the coupling domain (2002), and the other of the at least three domains (2300) is arranged towards a second k-space direction (2020) opposite to the first k-space direction (2010) from the coupling domain (2002).

5. A display structure (1000) according to any of the preceding claims, wherein the at least one returning set of beams (1040) comprises a first returning set of beams (1041), and the retardation and out-coupling structure (1400) comprises a retardation grating (1410) configured to diffract the diffracted set of beams (1035) such that the first returning set of beams (1041) and a continuing set of beams (1043) are formed and guided towards the exit pupil expansion structure (1300) and the out-coupling grating (1420), respectively.

6. A display structure (1000) according to claim 5, wherein the retardation grating (1410) is implemented as a one-dimensional grating and configured to form the first returning set of beams (1041) by first-order diffraction and the continuing set of beams by zeroth-order diffraction.

7. A display structure (1000) according to claim 1, wherein the first length, l₁, is definable as a simple fraction, e.g., one half, of the second length, l₂.

8. A display structure (1000) according to claim 7, wherein each first structural motif (1421) of the plurality of first structural motifs and each second structural motif (1422) of the plurality of second structural motifs is rectangular and has a first width, w₁, and a second width, w₂, respectively, along a secondary direction (1402) perpendicular to the primary direction (1401), and a sum, w₁ + w₂, of the first width, w₁, of the first structural motifs (1421) and the second width, w₂, of the second structural motifs (1422) is selected such that diffraction of light received by the out-coupling grating (1420) is prevented along the secondary direction (1402).

9. A display structure (1000) according to-claims 7 or 8, wherein the first structural motifs (1421) of the plurality of first structural motifs and the second structural motifs (1422) of the plurality of second structural motifs are arranged in a regular interspersed two-dimensional pattern.

10. A display structure (1000) according to any of the preceding claims, wherein the at least three sets of guided beams (1030) comprise a first set of guided beams (1031), a second set of guided beams (1032), a third set of guided beams (1033), and a fourth set of guided beams (1034).

11. A display device (4000) comprising a display structure (4200) in accordance with any of the preceding claims.

12. A display device (4000) according to claim 11, comprising a scanner-based optical engine (4300), **e.g.,** a laser-scanning optical engine, for directing the set of input beams (4020) to the in-coupling structure (4220).

13. A display device (4000) according to claim 11 or 12 implemented as a see-through display device.

14. A display device (4000) according to any of claims 11 to 13 implemented as a portable display device.

15. A display device (4000) according to any of claims 11 to 14 implemented as a vehicular display device.

16. A vehicle (5000) comprising a vehicular display device (5100) in accordance with claim 15.

## Patentansprüche

1. Anzeigestruktur (1000), umfassend:
- einen Wellenleiter (1100);
- eine Einkopplungsstruktur (1200), die dazu konfiguriert ist, einen Satz von Eingangsstrahlen (1020) als einen Satz von eingekoppelten Strahlen (1021), die einem Satz von eingekoppelten k-Vektoren (3021) zugeordnet sind, die eine erste Domäne (2310) im k-Raum in einer ringförmigen geführten Ausbreitungsdomäne (2001) definieren, die dem Wellenleiter (1100) zugeordnet ist, in den Wellenleiter (1100) einzukoppeln;
- eine diffraktive Austrittspupillen-Erweiterungsstruktur (1300), die dazu konfiguriert ist, den Satz von eingekoppelten Strahlen (1021) zu empfangen und den Satz von eingekoppelten Strahlen (1021) zu beugen, um mindestens drei Sätze von geführten Strahlen (1030) zu bilden, die mindestens drei Sätzen von k-Vektoren (3030) zugeordnet sind, die in mindestens drei Domänen (2300) liegen, einschließlich der ersten Domäne (2310); und
- eine diffraktive Verzögerungs- und Auskopplungsstruktur (1400), die dazu konfiguriert ist, von der Austrittspupillen-Erweiterungsstruktur (1300) einen gebeugten Satz von Strahlen (1035) zu empfangen, der einem gebeugten Satz von k-Vektoren (3035) zugeordnet ist, die in einer der mindestens drei Domänen (2300) liegen, wobei die diffraktive Verzögerungs- und Auskopplungsstruktur (1400) ein Auskopplungsgitter (1420) umfasst, das dazu konfiguriert ist, Licht als einen Satz von Ausgangsstrahlen (1044) aus dem Wellenleiter (1100) auszukoppeln;
wobei die Verzögerungs- und Auskopplungsstruktur (1400) dazu konfiguriert ist, den gebeugten Satz von Strahlen (1035) zu beugen, um mindestens einen zurückkehrenden Satz von Strahlen (1040) zu bilden, der in Richtung der Austrittspupillen-Erweiterungsstruktur (1300) geführt wird und mindestens einem zurückkehrenden Satz von k-Vektoren (3040) zugeordnet ist, wobei jeder des mindestens einen zurückkehrenden Satzes von k-Vektoren (3040) in einer beliebigen anderen der mindestens drei Domänen (2300) liegt,
wobei der mindestens eine zurückkehrende Satz von Strahlen (1040) einen zweiten zurückkehrenden Satz von Strahlen (1042) umfasst, und das Auskopplungsgitter (1420) dazu konfiguriert ist, Licht als den zweiten zurückkehrenden Satz von Strahlen (1042) in Richtung der Austrittspupillen-Erweiterungsstruktur (1300) zu beugen, und
**dadurch gekennzeichnet, dass** das Auskopplungsgitter (1420) eine Vielzahl von ersten Strukturmotiven und eine Vielzahl von zweiten Strukturmotiven umfasst, wobei jedes erste Strukturmotiv (1421) der Vielzahl von ersten Strukturmotiven entlang einer Primärrichtung (1401) eine erste Länge l₁ zur Bildung des zweiten zurückkehrenden Satzes von Strahlen (1042) durch Beugung erster Ordnung aufweist, und jedes zweite Strukturmotiv (1422) der Vielzahl von zweiten Strukturmotiven entlang der Primärrichtung (1401) eine zweite Länge l₂ aufweist, die größer als die erste Länge l₁ ist, zur Bildung des Satzes von Ausgangsstrahlen (1044) durch Beugung erster Ordnung.

2. Anzeigestruktur (1000) nach Anspruch 1, wobei die Austrittspupillen-Erweiterungsstruktur (1300) ein zweidimensionales Austrittspupillen-Erweiterungsgitter (1310) zum Beugen des Satzes von eingekoppelten Strahlen (1021) umfasst, um die mindestens drei Sätze von geführten Strahlen (1030) zu bilden.

3. Anzeigestruktur (1000) nach Anspruch 2, wobei das Austrittspupillen-Erweiterungsgitter (1310) dazu konfiguriert ist, jeden der mindestens drei Sätze von geführten Strahlen (1030) durch Beugung nullter Ordnung, durch Beugung erster Ordnung oder durch kombinierte Beugung erster Ordnung zu bilden.

4. Anzeigestruktur (1000) nach einem der vorhergehenden Ansprüche, wobei die geführte Ausbreitungsdomäne (2001) eine Kopplungsdomäne (2002) umgibt, wobei die eine der mindestens drei Domänen (2300) in Richtung einer ersten k-Raum-Richtung (2010) von der Kopplungsdomäne (2002) angeordnet ist und die andere der mindestens drei Domänen (2300) in Richtung einer zweiten k-Raum-Richtung (2020) entgegengesetzt zur ersten k-Raum-Richtung (2010) von der Kopplungsdomäne (2002) angeordnet ist.

5. Anzeigestruktur (1000) nach einem der vorhergehenden Ansprüche, wobei der mindestens eine zurückkehrende Satz von Strahlen (1040) einen ersten zurückkehrenden Satz von Strahlen (1041) umfasst, und die Verzögerungs- und Auskopplungsstruktur (1400) ein Verzögerungsgitter (1410) umfasst, das dazu konfiguriert ist, den gebeugten Satz von Strahlen (1035) derart zu beugen, dass der erste zurückkehrende Satz von Strahlen (1041) und ein fortführender Satz von Strahlen (1043) gebildet und in Richtung der Austrittspupillen-Erweiterungsstruktur (1300) bzw. des Auskopplungsgitters (1420) geführt werden.

6. Anzeigestruktur (1000) nach Anspruch 5, wobei das Verzögerungsgitter (1410) als eindimensionales Gitter implementiert und dazu konfiguriert ist, den ersten zurückkehrenden Satz von Strahlen (1041) durch Beugung erster Ordnung und den fortführenden Satz von Strahlen durch Beugung nullter Ordnung zu bilden.

7. Anzeigestruktur (1000) nach Anspruch 1, wobei die erste Länge l₁ als ein einfacher Bruchteil, z. B. die Hälfte, der zweiten Länge l₂ definierbar ist.

8. Anzeigestruktur (1000) nach Anspruch 7, wobei jedes erste Strukturmotiv (1421) der Vielzahl von ersten Strukturmotiven und jedes zweite Strukturmotiv (1422) der Vielzahl von zweiten Strukturmotiven rechteckig ist und eine erste Breite w₁ bzw. eine zweite Breite w₂ entlang einer Sekundärrichtung (1402) senkrecht zur Primärrichtung (1401) aufweist, und eine Summe w₁ + w₂ der ersten Breite w₁ der ersten Strukturmotive (1421) und der zweiten Breite w₂ der zweiten Strukturmotive (1422) derart gewählt ist, dass eine Beugung von durch das Auskopplungsgitter (1420) empfangenem Licht entlang der Sekundärrichtung (1402) verhindert wird.

9. Anzeigestruktur (1000) nach Anspruch 7 oder 8, wobei die ersten Strukturmotive (1421) der Vielzahl von ersten Strukturmotiven und die zweiten Strukturmotive (1422) der Vielzahl von zweiten Strukturmotiven in einem regelmäßigen durchsetzten zweidimensionalen Muster angeordnet sind.

10. Anzeigestruktur (1000) nach einem der vorhergehenden Ansprüche, wobei die mindestens drei Sätze von geführten Strahlen (1030) einen ersten Satz von geführten Strahlen (1031), einen zweiten Satz von geführten Strahlen (1032), einen dritten Satz von geführten Strahlen (1033) und einen vierten Satz von geführten Strahlen (1034) umfassen.

11. Anzeigevorrichtung (4000), die eine Anzeigestruktur (4200) nach einem der vorhergehenden Ansprüche umfasst.

12. Anzeigevorrichtung (4000) nach Anspruch 11, umfassend eine scannerbasierte optische Engine (4300), z. B. eine optische Laser-Scanning-Engine, zum Lenken des Satzes von Eingangsstrahlen (4020) auf die Einkopplungsstruktur (4220).

13. Anzeigevorrichtung (4000) nach Anspruch 11 oder 12, die als durchsichtige Anzeigevorrichtung ausgeführt ist.

14. Anzeigevorrichtung (4000) nach einem der Ansprüche 11 bis 13, die als tragbare Anzeigevorrichtung ausgeführt ist.

15. Anzeigevorrichtung (4000) nach einem der Ansprüche 11 bis 14, die als Fahrzeuganzeigevorrichtung ausgeführt ist.

16. Fahrzeug (5000), das eine Fahrzeuganzeigevorrichtung (5100) nach Anspruch 15 umfasst.

## Revendications

1. Structure d'affichage (1000), comprenant :
- un guide d'ondes (1100) ;
- une structure de couplage d'entrée (1200) configurée pour coupler un ensemble de faisceaux d'entrée (1020) dans le guide d'ondes (1100) sous la forme d'un ensemble de faisceaux couplés en entrée (1021) associé à un ensemble de vecteurs k couplés en entrée (3021) définissant un premier domaine (2310) dans l'espace k dans un domaine de propagation guidée annulaire (2001) associé au guide d'ondes (1100) ;
- une structure d'expansion de pupille de sortie diffractive (1300) configurée pour recevoir l'ensemble de faisceaux couplés en entrée (1021) et pour diffracter l'ensemble de faisceaux couplés en entrée (1021) de façon à former au moins trois ensembles de faisceaux guidés (1030) associés à au moins trois ensembles de vecteurs k (3030) se situant dans au moins trois domaines (2300) comprenant le premier domaine (2310) ; et
- une structure de retardement et de couplage de sortie diffractive (1400) configurée pour recevoir, en provenance de la structure d'expansion de pupille de sortie (1300), un ensemble diffracté de faisceaux (1035) associés à un ensemble de vecteurs k diffractés (3035) se situant dans l'un des au moins trois domaines (2300), la structure de retardement et de couplage de sortie diffractive (1400) comprenant un réseau de couplage de sortie (1420) configuré pour coupler de la lumière hors du guide d'ondes (1100) sous la forme d'un ensemble de faisceaux de sortie (1044) ;
dans laquelle la structure de retardement et de couplage de sortie (1400) est configurée pour diffracter l'ensemble diffracté de faisceaux (1035) de façon à former au moins un ensemble de retour de faisceaux (1040) guidé vers la structure d'expansion de pupille de sortie (1300) et associé à au moins un ensemble de vecteurs k de retour (3040), chacun de l'au moins un ensemble de vecteurs k de retour (3040) se situant dans n'importe quel autre des au moins trois domaines (2300),
dans laquelle l'au moins un ensemble de retour de faisceaux (1040) comprend un deuxième ensemble de retour de faisceaux (1042), et le réseau de couplage de sortie (1420) est configuré pour diffracter de la lumière vers la structure d'expansion de pupille de sortie (1300) sous la forme du deuxième ensemble de retour de faisceaux (1042), et
**caractérisée en ce que** le réseau de couplage de sortie (1420) comprend une pluralité de premiers motifs structurels et une pluralité de deuxièmes motifs structurels, chaque premier motif structurel (1421) de la pluralité de premiers motifs structurels présente le long d'une direction principale (1401) une première longueur, l₁, pour former le deuxième ensemble de retour de faisceaux (1042) par diffraction de premier ordre, et chaque deuxième motif structurel (1422) de la pluralité de deuxièmes motifs structurels présente le long de la direction principale (1401) une deuxième longueur, l₂, supérieure à la première longueur, l₁, pour former l'ensemble de faisceaux de sortie (1044) par diffraction de premier ordre.

2. Structure d'affichage (1000) selon la revendication 1, dans laquelle la structure d'expansion de pupille de sortie (1300) comprend un réseau d'expansion de pupille de sortie bidimensionnel (1310) pour diffracter l'ensemble de faisceaux couplés en entrée (1021) de façon à former les au moins trois ensembles de faisceaux guidés (1030).

3. Structure d'affichage (1000) selon la revendication 2, dans laquelle le réseau d'expansion de pupille de sortie (1310) est configuré pour former chacun des au moins trois ensembles de faisceaux guidés (1030) par diffraction d'ordre zéro, par diffraction de premier ordre, ou par diffraction de premier ordre combinée.

4. Structure d'affichage (1000) selon l'une quelconque des revendications précédentes, dans laquelle le domaine de propagation guidée (2001) entoure un domaine de couplage (2002), l'un des au moins trois domaines (2300) est disposé vers une première direction de l'espace k (2010) depuis le domaine de couplage (2002), et l'autre des au moins trois domaines (2300) est disposé vers une deuxième direction de l'espace k (2020) opposée à la première direction de l'espace k (2010) depuis le domaine de couplage (2002).

5. Structure d'affichage (1000) selon l'une quelconque des revendications précédentes, dans laquelle l'au moins un ensemble de retour de faisceaux (1040) comprend un premier ensemble de retour de faisceaux (1041), et la structure de retardement et de couplage de sortie (1400) comprend un réseau de retardement (1410) configuré pour diffracter l'ensemble diffracté de faisceaux (1035) de telle sorte que le premier ensemble de retour de faisceaux (1041) et un ensemble de continuation de faisceaux (1043) soient formés et guidés vers la structure d'expansion de pupille de sortie (1300) et le réseau de couplage de sortie (1420), respectivement.

6. Structure d'affichage (1000) selon la revendication 5, dans laquelle le réseau de retardement (1410) est mis en œuvre sous la forme d'un réseau unidimensionnel et configuré pour former le premier ensemble de retour de faisceaux (1041) par diffraction de premier ordre et l'ensemble de continuation de faisceaux par diffraction d'ordre zéro.

7. Structure d'affichage (1000) selon la revendication 1, dans laquelle la première longueur, l₁, peut être définie comme une fraction simple, par exemple, la moitié, de la deuxième longueur, l₂.

8. Structure d'affichage (1000) selon la revendication 7, dans laquelle chaque premier motif structurel (1421) de la pluralité de premiers motifs structurels et chaque deuxième motif structurel (1422) de la pluralité de deuxièmes motifs structurels est rectangulaire et présente une première largeur, w₁, et une deuxième largeur, w₂, respectivement, le long d'une direction secondaire (1402) perpendiculaire à la direction principale (1401), et une somme, w₁ + w₂, de la première largeur, w₁, des premiers motifs structurels (1421) et de la deuxième largeur, w₂, des deuxièmes motifs structurels (1422) est choisie de telle sorte que la diffraction de la lumière reçue par le réseau de couplage de sortie (1420) est empêchée le long de la direction secondaire (1402).

9. Structure d'affichage (1000) selon la revendication 7 ou 8, dans laquelle les premiers motifs structurels (1421) de la pluralité de premiers motifs structurels et les deuxièmes motifs structurels (1422) de la pluralité de deuxièmes motifs structurels sont disposés selon un agencement bidimensionnel régulier intercalé.

10. Structure d'affichage (1000) selon l'une quelconque des revendications précédentes, dans laquelle les au moins trois ensembles de faisceaux guidés (1030) comprennent un premier ensemble de faisceaux guidé (1031), un deuxième ensemble de faisceaux guidé (1032), un troisième ensemble de faisceaux guidé (1033) et un quatrième ensemble de faisceaux guidé (1034).

11. Dispositif d'affichage (4000) comprenant une structure d'affichage (4200) selon l'une quelconque des revendications précédentes.

12. Dispositif d'affichage (4000) selon la revendication 11, comprenant un moteur optique à balayage (4300), par exemple un moteur optique à balayage laser, pour diriger l'ensemble de faisceaux d'entrée (4020) vers la structure de couplage d'entrée (4220).

13. Dispositif d'affichage (4000) selon la revendication 11 ou 12, mis en œuvre sous la forme d'un dispositif d'affichage transparent.

14. Dispositif d'affichage (4000) selon l'une quelconque des revendications 11 à 13, mis en œuvre sous la forme d'un dispositif d'affichage portable.

15. Dispositif d'affichage (4000) selon l'une quelconque des revendications 11 à 14, mis en œuvre sous la forme d'un dispositif d'affichage pour véhicule.

16. Véhicule (5000) comprenant un dispositif d'affichage pour véhicule (5100) selon la revendication 15.
